# EUROPEAN PATENT SPECIFICATION

(11) **EP 2 538 000 B1**
(45) Date of publication and mention of the grant of the patent: **12.10.2016**
(21) Application number: 12161018.2
(22) Date of filing: 23.03.2012
(51) Int. Cl.: E04H 12/34, B21D 1/08, E04H 12/08

(54) **Method for correcting ovality in wind turbine towers**
Verfahren zur Korrektur der Unrundheit in Windturbinentürmen
Procédé permettant de corriger l'ovalisation dans des tours de turbine éolienne

(30) Priority: 24.06.2011 DK 201170326
(43) Date of publication of application: 26.12.2012
(73) Proprietor: Vestas Wind Systems A/S, 8200 Aarhus N (DK)
(72) Inventor: Øllgaard, Børge, 6700 Esbjerg (DK); Christensen, Gorm Ditlev, 8370 Hadsten (DK)
(74) Representative: Vestas Patents Department

(56) References cited:
- DE-U1-202010 000 868
- US-A1- 2010 307 097
- US-A1- 2011 131 898

## Description

### FIELD

The field is that of methods and tooling for correcting flange ovalities, and particularly for correcting flange ovalities of wind turbine tower section flanges during the tower erection.

### BACKGROUND

Wind turbine towers are often constructed of different vertical segments to allow for easier transportation and handling. Each section typically includes steel outer walls that have been rolled from steel sheet stock and welded together to form a conical shape. Each of the upper and lower ends of the conical tower sections may be welded to a machined, annular flange. The flanges at each end may have apertures that receive threaded fasteners for securing the flange, and thus the conical tower section, to adjacent conical tower sections.

Ideally, the flanges and the walls of the wind turbine tower sections are perfectly round, or at least have a common shape to facilitate mating with adjacent tower sections. However, normal manufacturing variation and deformation that may occur when tower sections are transported to a tower erection site may result in tower sections with slightly ovalized cross sections. When erected, ovalized tower sections and/or flanges may prevent fasteners from being passed through the apertures of adjacent flanges, thereby preventing tower sections from being mated to one another. DE 2020100008684, US 2011/131898 and US2010/307097 represent the state of the art for correction of flange evalities.

### SUMMARY

According to one aspect of the invention, a method is disclosed for correcting ovality of a wind turbine tower section when assembling a wind turbine tower. The method includes positioning a pair of flanges of wind turbine tower sections adjacent to one another, where at least one of the pair of flanges has an ovality condition. A first set of fasteners are installed into mounting apertures of the pair of flanges at a first lateral side of the wind turbine tower sections. A flange ovality correction tool is positioned in a mounting aperture of a first of the pair flanges at a second side of the wind turbine tower sections, different than the first side. An extension member of the tool is extended toward a second of the pair of flanges to urge the second of the pair of flanges away from the first lateral side of the wind turbine tower sections while urging the first of the pair of flanges toward the first lateral side. A second set of fasteners is installed into apertures of the pair of flanges at the second side of the wind turbine tower sections. The flange ovality correction tool is then removed and a fastener is installed and fastened in the aperture previously occupied by the flange ovality correction tool.

These and other aspects of the invention will be appreciated from the following description and claims.

### BRIEF DESCRIPTION OF THE FIGURES

The accompanying drawings are not intended to be drawn to scale. In the drawings, each identical or nearly identical component that is illustrated in various figures may be represented by a like numeral. For purposes of clarity, not every component may be labeled in every drawing. In the drawings:
Fig. 1 is a perspective view of a flange ovality correction tool installed on a flange of a tower section, according to one embodiment.
Fig. 2 is a side view of a flange ovality correction tool, according to one embodiment.
Fig. 3 shows a pair of flanges, at least one of which is displaying an ovality condition in an exaggerated fashion.

### DETAILED DESCRIPTION OF THE FIGURES AND VARIOUS EMBODIMENTS

Wind turbine towers sections are typically constructed with conically shaped walls connected at each end to annular flanges. The flanges may help provide rigidity to the conically shaped walls and may include features to mount the tower sections to one another. According to many embodiments, these features includes multiple apertures that align with apertures in a corresponding flange of a mating tower section to allow fasteners to pass there through, connecting the flanges to one another. Aspects of the invention relate to methods and apparatus that may be used to deform a flange to correct any ovalities that might otherwise prevent fasteners from passing through apertures of adjacent flanges. According to some embodiments, the methods and apparatus allow for the correction of ovalities with some of the same tooling that is used to fasten tower sections to one another.

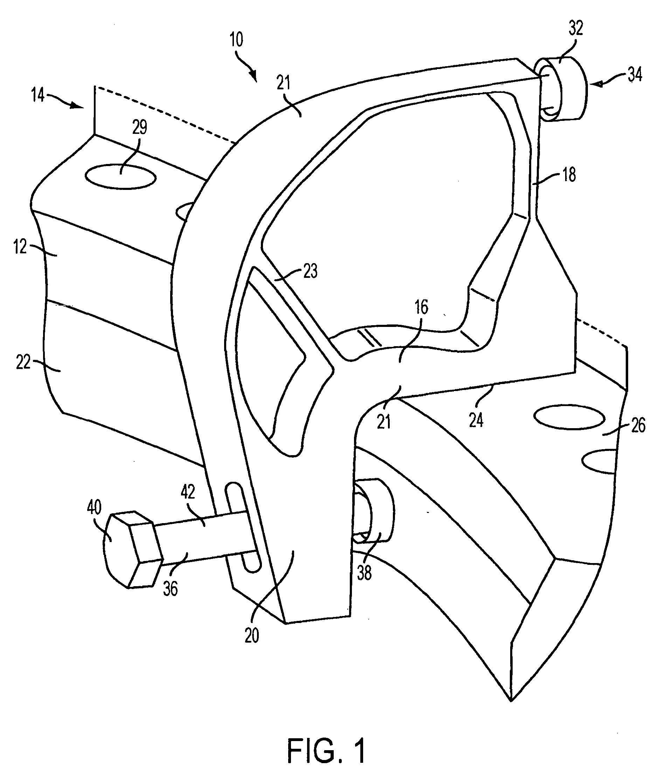

Turning now to the figures, and initially Fig. 1, which shows one embodiment of a tool 10 that may be used to correct an oval condition in the flange 12 of a wind turbine tower section 14.
The tool includes a body 16 that provides structural support to a first portion 18 of the tool that mounts to a first flange 12 that is to be pulled inwardly toward the central portion of the tower section to correct an ovality condition. The body 16 also supports a second portion 20 of the tool that pushes against the adjacent flange to urge the adjacent flange outwardly from a central portion of the tower as the ovality is corrected. As may be appreciated, at least portions of the body are placed in bending during use. To provide for strength in bending, the body includes beam-like structures 21 at outer and inner portions of the tool and that are connected by one or more gussets 23. It is to be appreciated, however, that other body constructions are also possible.

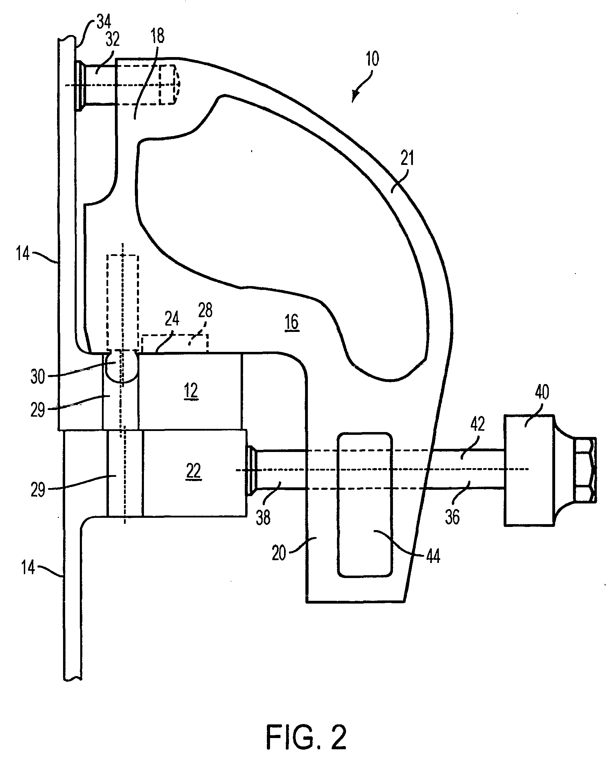

As illustrated in Figs. 1 and 2, the tool may include various features that contact and stabilize the tool with respect to the flange to be urged inwardly. A flange seating surface 24 is configured to rest directly on horizontal surface 26 of the flange to be moved inwardly. The flange seating surface 24 may include a permanent magnet 28 to help hold the tool in position on the flange, particularly when the flange to be urged inwardly is positioned underneath a flange that is being urged outwardly. A reaction pin 30 extends from the flange seating surface 24 and is sized to fit within an aperture 29 of the flange that is to be moved into alignment. Additionally, a reaction member 32 extends from the body of the tool to contact the inner surface 34 of the wall of the tower section. An adjustable mounting, such as a threaded engagement, may allow the reaction member to be moved to contact the wall of the tower section, which may be positioned different distances from the apertures on different towers or even on different sections of a common tower.

As also shown in Figs. 1 and 2, the tool includes an extension member 36 to contact the flange to be urged outwardly. As illustrated, the extension member 36 includes a first end 38 for contacting the flange to move urged outwardly, a second end 40 that receives a tool to move the threaded bolt-like structure, and a shank 42 that includes threads that mate with the tool and that allow the extension member 36 to be moved with respect to the body 16 of the tool. According to some embodiments, the body of the tool itself may be threaded to receive the extension member. Alternatively, as illustrated, the tool may include a cavity 44 that receives a threaded nut that, in turn, receives the extension member. The nut may be held within a slot in the body of the tool to allow the nut to move upward and downward as may be desired to position the extension member in an optimal spot on the flange to be urged outwardly. Additionally or alternatively, the nut may be removed from the tool in case of wear / damage, or if a different size extension member is desired for use.

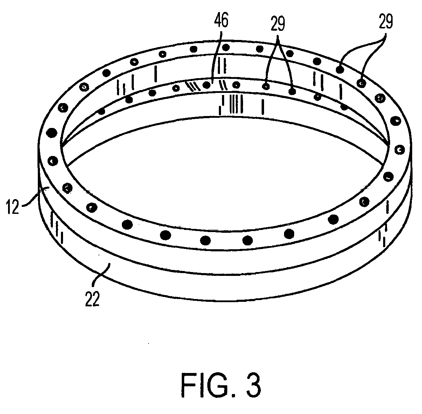

Fig. 3 illustrates a pair of mating flanges, one of which exhibits an ovality condition 46 that prevents at least some of the apertures in the flanges from aligning with one another and the passage of fasteners through the apertures (the ovality condition shown in Fig. 3 is exaggerated for purposes of illustration). Such a condition may typically be identified when assemblers find that they cannot install a complete set of bolts through the apertures in mating flanges, after a crane has positioned an upper tower section in position above a lower tower section for mounting. In this scenario, the assembly may position the reaction pin into an aperture on a flange that is to be urged inwardly to correct the ovality. As shown in Fig. 3, this an aperture of the upper flange opposite to the fasteners that have been successfully installed through aligned apertures of the flanges. It is to be appreciated, however, that according to other situations the reaction pin may be installed upwardly into an aperture of a lower flange that is to be urged inwardly.

With the reaction pin positioned within an aperture, the reaction member may be adjusted to make contact with the wall of the tower section. The extension member may be moved upward or downward, as desired, to place the first end of the extension member into contact at a central portion of the flange to be urged outwardly. The second end of the extension member may be rotated with a wrench or power tool to, in turn, distort the flanges until any ovalities are removed, at least to the extent that fasteners are allowed to pass through the apertures of both flanges. Once the apertures are aligned and enough fasteners have been secured to hold the flanges in position, the extension member of the tool may be released and the tool removed from the flange to allow a fastener to be installed in the aperture previously occupied by the reaction member.

According to some embodiments, the second end of the extension member is constructed to be actuated with the same driver used to secure fasteners that hold the flanges to one another. In this respect, assemblers may use a minimum number of tools when mating tower sections to one another, thus minimizing valuable time during which a crane is used to support the section. According to some embodiments, the second end of the extension member and the fasteners include a hex head of a bolt that may be rotated with a wrench, either manually or with power tools.

It should be understood that aspects of the invention are described herein with reference to the figures, which show illustrative embodiments in accordance with aspects of the invention. The illustrative embodiments described herein are not necessarily intended to show all aspects of the invention, but rather are used to describe a few illustrative embodiments. Thus, aspects of the invention are not intended to be construed narrowly in view of the illustrative embodiments. In addition, it should be understood that aspects of the invention may be used alone or in any suitable combination with other aspects of the invention.

Having thus described several aspects of at least one embodiment of this invention, it is to be appreciated various alterations, modifications, and improvements will readily occur to those skilled in the art. Such alterations, modifications, and improvements are intended to be part of this disclosure, and are intended to be within the scope of the appended claims.

## Claims

1. A method of correcting ovality of a wind turbine tower section when assembling a wind turbine tower, the method comprising:
positioning a pair of flanges (12, 22) of wind turbine tower sections adjacent to one another, at least one of the pair of flanges having an ovality condition;
installing a first set of fasteners into mounting apertures of the pair of flanges (12, 22) at a first lateral side of the wind turbine tower sections;
positioning a flange ovality correction tool (10) in a mounting aperture (29) of a first (12) of the pair flanges (12, 22) at a second side of the wind turbine tower sections, different than the first side;
extending an extension member (36) of the tool (10) toward a second(22) of the pair of flanges to urge the second (22) of the pair of flanges (12, 22) away from the first lateral side of the wind turbine tower sections while urging the first (12) of the pair of flanges toward the first lateral side;
installing and fastening a second set of fasteners into apertures of the pair of flanges at the second side of the wind turbine tower sections; and
removing the flange ovality correction tool (10) and installing and fastening a fastener in the aperture previously occupied by the flange ovality correction tool (10).

2. The method of claim 1, wherein extending the extension member (36) of the tool (10) includes rotating a threaded extension (12) of the flange ovality correction tool (10) with a wrench to cause the extension member (36) of the tool to move toward the second (22) of the pair of flanges (12, 22).

3. The method of claim 2, wherein the wrench that rotates the threaded extension of the flange ovality correction tool is sized to mate with and to tighten the first and second set of fasteners.

## Patentansprüche

1. Verfahren zum Korrigieren der Unrundheit eines Abschnitts eines Windturbinenturms, wenn ein Windturbinenturm zusammengebaut wird, wobei das Verfahren umfasst:
Positionieren eines Flanschpaares (12, 22) von Abschnitten eines Windturbinenturms zueinander benachbart, wobei mindestens ein Flansch des Flanschpaares einen Zustand der Unrundheit aufweist;
Installieren eines ersten Satzes von Befestigungsmitteln in Befestigungsöffnungen des Flanschpaares (12, 22) an einer ersten lateralen Seite der Abschnitte des Windturbinenturms;
Positionieren eines Werkzeugs (10) für eine Korrektur einer Flanschunrundheit in einer Befestigungsöffnung (29) eines ersten Flansches (12) des Flanschpaares (12, 22) an einer zweiten Seite der Abschnitte des Windturbinenturms, die eine andere als die erste Seite ist;
Ausdehnen eines Dehnelements (36) des Werkzeugs (10) in Richtung eines zweiten Flansches (22) des Flanschpaares, um den zweiten Flansch (22) des Flanschpaares (12, 22) von der ersten lateralen Seite der Abschnitte des Windturbinenturms wegzudrücken, während der erste Flansch (12) des Flanschpaares in Richtung der ersten lateralen Seite gedrückt wird;
Installieren und Befestigen eines zweiten Satzes von Befestigungsmitteln in Öffnungen des Flanschpaares an der zweiten Seite der Abschnitte des Windturbinenturms; und
Entfernen des Werkzeugs (10) für eine Korrektur einer Flanschunrundheit und Installieren und Befestigen eines Befestigungsmittels in der Öffnung, die vorher von dem Werkzeug (10) für eine Korrektur einer Flanschunrundheit belegt war.

2. Verfahren nach Anspruch 1, wobei das Ausdehnen des Dehnelements (36) des Werkzeugs (10) ein Drehen einer Gewindeerweiterung (42) des Werkzeugs (10) für eine Korrektur einer Flanschunrundheit mit einem Schraubenschlüssel enthält, um das Dehnelement (36) des Werkzeugs zu veranlassen, sich in Richtung des zweiten Flansches (22) des Flanschpaares (12, 22) zu bewegen.

3. Verfahren nach Anspruch 2, wobei der Schraubenschlüssel, der die Gewindeerweiterung des Werkzeugs für eine Korrektur einer Flanschunrundheit dreht, von der Größe so bemessen ist, um dem ersten und zweiten Satz von Befestigungsmitteln zu entsprechen und um diese festzuziehen.

## Revendications

1. Procédé de correction de l'ovalisation d'une section de tour d'éolienne lors de l'assemblage d'une tour d'éolienne, le procédé comprenant les étapes consistant à :
positionner une paire de brides (12, 22) de sections de la tour d'éolienne adjacentes l'une à l'autre, au moins l'une de la paire de brides ayant un état d'ovalisation ;
installer un premier ensemble de fixations dans des ouvertures de montage de la paire de brides (12, 22) sur un premier côté latéral des sections de la tour d'éolienne ;
positionner un outil de correction d'ovalisation de brides (10) dans une ouverture de montage (29) d'une première (12) des brides (12, 22) de la paire sur un second côté des sections de la tour de l'éolienne différent du premier côté ;
étendre un élément d'extension (36) de l'outil (10) vers une seconde (22) de la paire de brides pour presser la seconde (22) de la paire de brides (12, 22) en s'écartant du premier côté latéral des sections de la tour de l'éolienne tout en pressant la première (12) de la paire de brides vers le premier côté latéral ;
installer et assujettir un second ensemble de fixations dans des ouvertures de la paire de brides sur le second côté des sections de la tour de l'éolienne ; et
retirer l'outil de correction d'ovalisation de brides (10) et installer et assujettir une fixation dans l'ouverture précédemment occupée par l'outil de correction d'ovalisation de brides (10).

2. Procédé selon la revendication 1, dans lequel l'extension de l'élément d'extension (36) de l'outil (10) comprend la rotation d'une extension filetée (42) de l'outil de correction d'ovalisation de brides (10) avec une clé pour amener l'élément d'extension (36) de l'outil à se déplacer vers la seconde (22) de la paire de brides (12, 22).

3. Procédé selon la revendication 2, dans lequel la clé qui fait tourner l'extension filetée de l'outil de correction d'ovalisation de brides est calibrée pour coopérer avec le premier et le second ensemble de fixations et les resserrer.
